# EUROPÄISCHE PATENTSCHRIFT

(11) **EP 1 445 759 B1**
(45) Veröffentlichungstag und Bekanntmachung des Hinweises auf die Patenterteilung: **24.02.2010**
(21) Anmeldenummer: 04100134.8
(22) Anmeldetag: 16.01.2004
(51) Int. Cl.: G10L 15/20

(54) **Benutzeradaptives Verfahren zur Geräuschmodellierung in Spracherkennung**
User adaptive method for modeling of background noise in speech recognition
Méthode adaptée à l'usager pour modéliser le bruit de fond en reconnaissance de parole

(30) Priorität: 10.02.2003 DE 10305369
(43) Veröffentlichungstag der Anmeldung: 11.08.2004
(73) Patentinhaber: SIEMENS AKTIENGESELLSCHAFT, 80333 München (DE)
(72) Erfinder: Major, Andreas Ralph, 85238 Petershausen (DE); Schröer, Andreas, 80337 München (DE)

(56) Entgegenhaltungen:
- EP-A- 1 096 471
- US-A- 5 970 446
- US-A1- 2002 087 306

## Beschreibung

Technische Verfahren zur Erkennung der menschlichen Sprache werden heutzutage auf einer Vielzahl von mobilen Geräten wie zum Beispiel Mobiltelefonen, Personal Digital Assistants (PDAs) und Wearables (MP3-Player, Uhren-Handys etc.) eingesetzt. Dabei wird unter anderem eine sprecherunabhängige Spracherkennung basierend auf Hidden-Markov-Modellierung (HMM) der Phoneme (oder anderer Lauteinheiten) einer Sprache und des Geräuschhintergrundes oder von Stille eingesetzt.

Dabei führen folgende zwei Punkte zu einer starken Beeinträchtigung der Erkennungsleistung: Erstens besitzen die Audiokanäle (Mikrofon und Analog-/Digitalwandler) der oben genannten Geräte typischerweise eine sehr unterschiedliche Charakteristik, beispielsweise in Bezug auf die Auflösung und Genauigkeit der A/D-Wandlung und dem bei einer Audioaufnahme entstehenden Rauschen. Zweitens werden alle genannten Geräte in sehr unterschiedlichen akustischen Umgebungen eingesetzt, also beispielsweise im Auto, im Büro, auf der Straße etc. Deshalb ist es sehr schwierig, den Geräuschhintergrund bei der Spracherkennung zu modellieren.

Ein Standardverfahren zur Modellierung des Geräuschhintergrunds besteht darin, bei der Erzeugung der Modelldaten sehr viele Äußerungen mit unterschiedlichem Geräuschhintergrund zu berücksichtigen. Dieser so genannte Trainingsprozess wird dann auf einer Sprachdatenbank durchgeführt, die Aufnahmen aus verschiedenen akustischen Umgebungen enthält, wie beispielsweise Auto, Büro etc. Der Nachteil hierbei ist, dass die unterschiedlichen Charakteristiken der Audiokanäle von mobilen Geräten nicht erfasst werden können und dass es unmöglich ist, alle akustischen Umgebungen in angemessener Weise zu repräsentieren.

Eine weitere Möglichkeit besteht darin, Modellierungen für spezielle Geräusche in das aktive Vokabular des Erkenners aufzunehmen (Garbage-Modellierung). Diese Art der Modellierung hat aber den Nachteil, dass nur vor und nach dem zu erkennenden Wort Nebengeräusche auf diese Garbage-Worte abgebildet werden können. Das Erkennen des geäußerten Wortes geschieht weiterhin erschwert durch Hintergrundgeräusche.

Eine andere, vielfach eingesetzte Möglichkeit, um eine gute Hintergrundgeräuschmodellierung sicher zu stellen, sind Verfahren zur Geräuschreduzierung, welche Hintergrundgeräusche in den Audiodaten zu unterdrücken versuchen. Die Geräuschreduzierung steht jedoch nicht in Konkurrenz zu den übrigen hier beschriebenen Verfahren, da sie sich nicht gegenseitig ausschließen und Geräuschreduzierung auf einer ganz anderen Herangehensweise beruht: Sie ändert die Audiodaten und macht keine Annahmen über die Modellierung des Geräuschhintergrundes.

Außerdem ist es möglich, die Akustik eines Raumes aufzunehmen und somit den Audiokanal ein wenig an einen ganz bestimmten Raum anzupassen.

Aus der Patentschrift US 5,970,446 ist bekannt, bei der Spracherkennung ein zum aktuellen Geräuschhintergrund passendes Hintergrundgeräuschprofil zu berücksichtigen.

Davon ausgehend liegt der Erfindung die Aufgabe zugrunde, die Spracherkennungsleistung zu erhöhen und eine sichere Spracherkennung insbesondere auch bei unterschiedlichen Geräuschhintergründen zu gewährleisten.

Diese Aufgabe wird durch die in den unabhängigen Ansprüchen angegebenen Erfindungen gelöst. Vorteilhafte Ausgestaltungen ergeben sich aus den Unteransprüchen.

Dementsprechend werden in einem Verfahren zur rechnergestützten, automatischen Spracherkennung mehrere Hitergrundgräuschprofile verwendet, die jeweils unterschiedliche Geräuschhintergründe darstellen. Wenn sich in der Datenbank mit Hintergrundgeräuschprofilen ein passendes Hintergrundgeräuschprofil als Geräuschmodell für den aktuellen Geräuschhintergrund befindet, wird dieses Hintergrundgeräuschprofil ausgewählt und die Spracherkennung unter Berücksichtigung des Hintergrundgeräuschprofils vorgenommen. Wenn sich in der Datenbank kein passendes Hintergrundgeräuschprofil als Geräuschmodell für den aktuellen Geräuschhintergrund befindet, wird ein Hintergrundgeräuschprofil für diesen Geräuschhintergrund erstellt und die Spracherkennung unter Berücksichtigung des erstellten Hintergrundgeräuschprofils vorgenommen. Die Auswahl der Hintergrundgeräuschprofile aus der Datenbank geschieht vorzugsweise automatisch an Hand bestimmter Vorgaben, kann aber auch händisch durch einen Benutzer vorgenommen werden. Diese Vorgaben können beispielsweise die aktuell gemessenen Hintergrundgeräusche enthalten und/oder berücksichtigen, aber auch alternativ oder zusätzliche weitere Parameter, wie etwa die Uhrzeit oder eine bestimmte Umgebung, in der sich die Vorrichtung, die die Spracherkennung durchführt, gerade befindet.

Die Spracherkennung wird dann unter Berücksichtigung des ausgewählten Hintergrundgeräuschprofils vorgenommen.

Vorzugsweise wird zur Auswahl des Hintergrundgeräuschprofils der aktuelle Geräuschhintergrund analysiert und das Hintergrundgeräuschprofil unter Berücksichtigung dieser Analyse ausgewählt. Vorzugsweise wird dabei natürlich das Hintergrundgeräuschprofil ausgewählt, das den aktuellen Geräuschhintergrund am besten repräsentiert.

Alternativ oder zusätzlich kann aber auch der Benutzer die Wahl des Hintergrundgeräuschprofils vornehmen oder diese beeinflussen.

Eine andere alternative oder zusätzliche Möglichkeit besteht in der Berücksichtigung weiterer Parameter. So kann etwa die Vorrichtung, mit der die Spracherkennung durchgeführt wird, in eine Fahrzeughalterung eingesteckt sein. Im Verfahren wird dann erkannt, dass die Vorrichtung in der Fahrzeughalterung angeordnet ist, wozu die Vorrichtung über entsprechende Mittel verfügt. Daraufhin wird dann ein Hintergrundgeräuschprofil ausgewählt, das insbesondere für eine Spracherkennung in einem Auto angepasst ist.

Vorzugsweise sind die Hintergrundgeräuschprofile durch die für das Verfahren verwendete Vorrichtung erstellbar. Dazu wird ein Geräuschhintergrund aufgenommen und von der Vorrichtung ein Hintergrundgeräuschprofil für diesen Geräuschhintergrund erstellt. Dadurch lässt sich das Verfahren an unterschiedlichste Geräuschhintergründe anpassen und somit für die Belange des Benutzers adaptieren.

Weiterhin ist es von Vorteil, wenn mit Hilfe eines Voice-Activity-Detectors (VAD) festgestellt wird, ob ein Geräuschhintergrund vorliegt oder ob Sprache vorliegt. Diese Feststellung kann sowohl bei der Auswahl eines Hintergrundgeräuschprofils vorgenommen werden, als auch bei der Erstellung eines neuen Hintergrundgeräuschprofils.

Eine Vorrichtung, die eingerichtet ist, um das zuvor beschriebene Verfahren durchzuführen, weist insbesondere jeweils Mittel auf, die eingerichtet sind, die einzelnen Verfahrensschritte durchzuführen. Bevorzugte Ausgestaltungen der Vorrichtung ergeben sich analog zu den bevorzugten Ausgestaltungen des Verfahrens. Die Vorrichtung ist vorzugsweise ein mobiles Endgerät in Form eines Mobiltelefons, PDAs oder Wearables.

Ein Programmprodukt für eine Datenverarbeitungsanlage, das Codeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Codeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Vorteile und Merkmale der Erfindung ergeben sich aus der Beschreibung eines Ausführungsbeispiels anhand der Zeichnung. Dabei zeigt
- Figur 1: das Audiosignal der Worte "Treffen am Bahnhof";

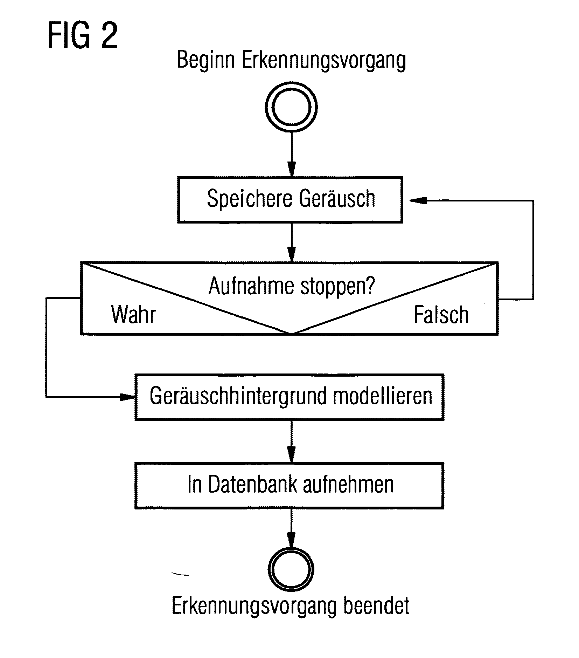

- Figur 2: ein Ablaufdiagramm für die Erstellung eines Hintergrundgeräuschprofils für einen Geräuschhintergrund;
- Figur 3: ein Ablaufdiagramm für ein Verfahren zur Spracherkennung.

Im Verfahren zur Spracherkennung werden möglichst genau zu dem Audiokanal und Benutzerprofil passende Hintergrundgeräuschprofile (Silence-Modelle) auf einem Endgerät trainiert. Diese Hintergrundgeräuschprofile finden dann bei der Erkennung Verwendung. Es wird in zwei Schritten vorgegangen, welche nachfolgend genau erläutert werden.

Zunächst startet der Benutzer des Endgeräts ein Geräuschtraining, wodurch der aktuelle Geräuschhintergrund aufgenommen wird. Bei einer Durchführung dieses Trainings in einem ruhigen Raum entspricht die Aufnahme dem Rauschen des Audiokanals. Wird zusätzlich noch eine Aufnahme während zum Beispiel eines Messebesuches gestartet, spiegelt die Aufnahme den Messelärm inklusive des Rauschens des Audiokanals wieder. Es können noch beliebige weitere Aufnahmen erstellt werden, zum Beispiel im Auto, im Zug, an einer belebten Straße usw. Hintergrundgeräuschaufnahmen können jederzeit und an jedem Ort von dem Benutzer vorgenommen werden.

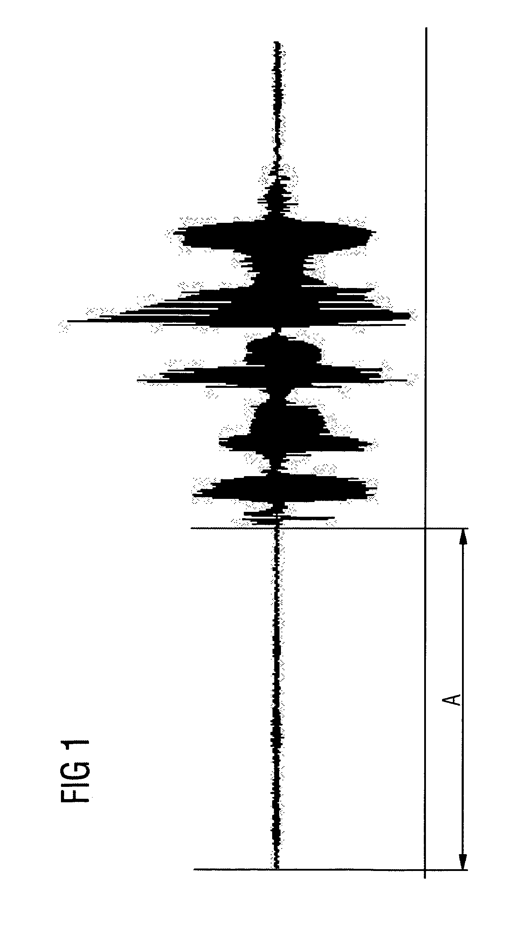

Figur 1 zeigt den Vorgang der Geräuschadaption, welcher explizit durch den Benutzer gestartet wird. Nachdem der Benutzer das Training gestartet hat, kann er die Geräuschaufnahme nach einer gewissen Zeitspanne wieder stoppen. Hierbei kann es sich um einige Sekunden bis zu mehreren Minuten handeln. Nachdem die Aufnahme vom Benutzer wieder gestoppt wurde, wird das Geräusch modelliert und das so gewonnene Hintergrundgeräuschprofil in einer Datenbank abgespeichert.

Bei jedem Erkennungsvorgang des Spracherkenners des Endgeräts werden alle vorhandenen Umgebungsaufnahmen bzw. die sie repräsentierenden Hintergrundgeräuschprofile für den jeweils aktuellen Geräuschhintergrund (Silence-Modellierung) in Betracht gezogen und verglichen. Dies geschieht auf folgende Weise: Startet der Benutzer die Spracherkennung, wird zunächst der Geräuschhintergrund untersucht. Hierzu kann ausgenutzt werden, dass es in der Regel ein bis zwei Sekunden dauert, bis der Benutzer mit dem Sprechen beginnt.

Ein Beispiel hierfür ist in Figur 1 gegeben. Hier kann man das Signal der Worte "Treffen am Bahnhof" erkennen. Es enthält deutliche Pausen am Anfang und am Ende der gesamten Aufnahme sowie kürzere Pausen zwischen den einzelnen Worten. Zu Beginn der Waveform ist der sicherere Bereich A zur Erkennung des Geräuschhintergrunds markiert. Dieser Bereich enthält das Rauschen des Audiokanals sowie den aktuellen Geräuschhintergrund. Der Bereich wird zur Geräuscherkennung untersucht. Der Unterschied, ob es sich bei einer Waveform um Geräusch oder Sprache handelt, kann zum Beispiel über die Energie der Position in der Aufnahme festgestellt werden.

Der Beginn der Sprache in der Äußerung kann mit einem Verfahren zur Sprachdetektion in Form eines Voice-Activity-Detectors, beispielsweise über Energieschwellen, gefunden werden. Anhand der so gewonnenen Aufnahme des aktuellen Geräuschhintergrundes zu Beginn des aktuellen Erkennungsvorgangs wird das am besten passende Hintergrundgeräuschprofil aus den vorhandenen Profilen ausgewählt. Mit dem nun ausgewählten Hintergrundgeräuschprofil wird die Erkennung durchgeführt.

Dies führt dazu, dass bei für den Benutzer typischen Geräuschhintergründen keine bzw. wenige Fehlerkennungen auftreten.

Ist der aktuelle Geräuschhintergrund keinem der bereits aufgenommenen Geräusche ähnlich, kann dem Benutzer empfohlen werden, diesen Geräuschhintergrund zu trainieren. Dies kann wahlweise aber auch automatisch, das heißt ohne Rückfrage, vorgenommen werden. Die Empfehlung für den Benutzer kann visuell und/oder per Audiosignal erfolgen.

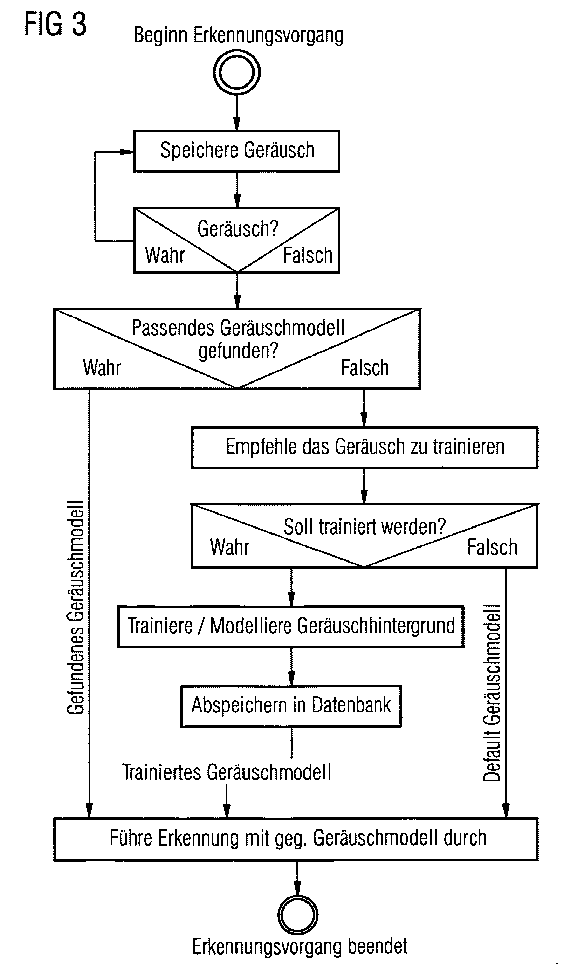

Der schematische Ablauf der Geräuscherkennung ist nochmals anhand von Figur 3 dargestellt. Hierbei startet der Benutzer den Spracherkenner. Die Aufnahme wird nun solange als Geräuschhintergrund aufgenommen, bis festgestellt wird, dass es sich ab dem aktuellen Abschnitt der Aufnahme um Sprache handelt. Hierzu wird ein Voice-Activity-Detector eingesetzt. Nun wird entschieden, ob sich in der Datenbank bereits ein passendes Hintergrundgeräuschprofil als Geräuschmodell befindet oder nicht. Existiert das Hintergrundgeräuschprofil, wird dieses zur Erkennung ausgewählt und die eigentliche Erkennung der vom Benutzer geäußerten Worte beginnt. Existiert dagegen kein passendes Hintergrundgeräuschprofil, wird dem Benutzer empfohlen, das Geräusch zu modellieren und in die Datenbank aufzunehmen. Alternativ lässt sich die Modellierung des unbekannten Geräuschhintergrund automatisch durchführen. Wählt der Benutzer das Training aus, wird der Geräuschhintergrund modelliert und anschließend sofort mit dem neuen Modell die Erkennung der Äußerung durchgeführt. Lehnt der Benutzer die Modellierung ab, wird der Erkennungsvorgang anhand eines Default-Modells durchgeführt.

Die Erfindung besitzt die Vorteile, dass ein Spracherkennungssystem bessere Resultate erzielt, da
- die Qualität eines schlechten Audiokanals eines Geräts eine geringere Rolle beim Erkennungsvorgang spielt. Dies liegt daran, dass der Audiokanal inklusive der Geräuschumgebung modelliert wird;
- Umgebungsgeräusche beim Erkennungsvorgang mitberücksichtigt werden, was die durch diese verursachte Verschlechterung des Erkennungsergebnisses mindert. Die Spracherkennung funktioniert optimal in den dynamisch durch den Benutzer definierten Geräuschumgebungen, da diese mitmodelliert werden;
- die einmal aufgenommenen, trainierten Hintergrundgeräuschprofile automatisch für den aktuell vorhandenen Geräuschhintergrund vom Spracherkennungsprogramm ausgewählt werden. Dies steht im Gegensatz zum Verhalten bisheriger Erkenner, die allenfalls die explizite, qualitative Auswahl einer nicht benutzer- und audiokanalspezifischen Geräuschumgebung ermöglichen.

Charakteristisch ist die Möglichkeit der individuellen Definition von Geräuschhintergründen durch den Benutzer, die eine optimale Erkennungsleistung im für ihn typischen Benutzungsumfeld eines mobilen Gerätes ermöglicht.

## Patentansprüche

1. Verfahren zur Spracherkennung mit einer Datenbank mit mehreren Hintergrundgeräuschprofilen, die unterschiedliche Geräuschhintergründe darstellen,
- bei dem, wenn sich in der Datenbank ein passendes Hintergrundgeräuschprofil als Geräuschmodell für den aktuellen Geräuschhintergrund befindet, dieses Hintergrundgeräuschprofil ausgewählt wird und die Spracherkennung unter Berücksichtigung des Hintergrundgeräuschprofils vorgenommen wird,
- bei dem, wenn sich in der Datenbank kein passendes Hintergrundgeräuschprofil als Geräuschmodell für den aktuellen Geräuschhintergrund befindet, ein Hintergrundgeräuschprofil für diesen Geräuschhintergrund erstellt und die Spracherkennung unter Berücksichtigung des erstellten Hintergrundgeräuschprofils vorgenommen wird.

2. Verfahren nach Anspruch 1,
- bei dem der aktuelle Geräuschhintergrund analysiert wird,
- bei dem das Hintergrundgeräuschprofil unter Berücksichtigung dieser Analyse ausgewählt wird.

3. Verfahren nach einem der vorhergehenden Ansprüche,
bei dem mit Hilfe eines Voice-Activity-Detectors festgestellt wird, ob ein Geräuschhintergrund vorliegt.

4. Vorrichtung, insbesondere mobiles Endgerät,
die eingerichtet ist, ein Verfahren nach einem der vorhergehenden Ansprüche durchzuführen, wozu sie jeweils Mittel zum Durchführen der einzelnen Verfahrensschritte aufweist.

5. Programmprodukt für eine Datenverarbeitungsanlage, das Codeabschnitte enthält, mit denen ein Verfahren nach einem der Ansprüche 1 bis 3 auf der Datenverarbeitungsanlage ausführbar ist.

## Claims

1. Speech recognition method comprising a database containing a plurality of background noise profiles representing different noise backgrounds,
- wherein, if the database contains a matching background noise profile as a noise model for the current noise background, said background noise profile is selected and the speech recognition is carried out taking into account the background noise profile,
- wherein, if the database contains no matching background noise profile as a noise model for the current noise background, a background noise profile is generated for said noise background and the speech recognition is carried out taking into account the generated background noise profile.

2. Method according to claim 1,
- wherein the current noise background is analysed,
- wherein the background noise profile is selected taking into account said analysis.

3. Method according to one of the preceding claims,
wherein it is established with the aid of a voice activity detector whether a noise background is present.

4. Device, in particular mobile terminal,
which is configured for carrying out a method according to one of the preceding claims, to which end it has means in each case for performing the individual steps of the method.

5. Program product for a data processing system, said program product containing sections of code by means of which a method according to one of claims 1 to 3 can be executed on the data processing system.

## Revendications

1. Procédé de reconnaissance vocale comportant une base de données avec plusieurs profils de bruits de fond qui représentent différents fonds bruités, dans lequel
- lorsque la base de données contient un profil de bruit de fond approprié en tant que modèle de bruit pour le fond bruité actuel, ce profil de bruit de fond est sélectionné et la reconnaissance vocale est effectuée compte tenu du profil de bruit de fond,
- lorsque la base de données ne contient aucun profil de bruit de fond approprié en tant que modèle de bruit pour le fond bruité actuel, un profil de bruit de fond est créé pour ce fond bruité et la reconnaissance vocale est effectuée compte tenu du profil de bruit de fond créé.

2. Procédé selon la revendication 1, dans lequel
- le fond bruité actuel est analysé,
- le profil de bruit de fond est sélectionné compte tenu de cette analyse.

3. Procédé selon l'une des revendications précédentes, dans lequel il est constaté, à l'aide d'un détecteur d'activité vocale, s'il y a un fond bruité.

4. Dispositif, en particulier terminal mobile, aménagé pour exécuter un procédé selon l'une des revendications précédentes, aux fins de quoi il comporte des moyens respectifs pour exécuter les différentes étapes du procédé.

5. Produit de programme pour une installation de traitement de données, lequel contient des parties de code permettant d'exécuter sur l'installation de traitement de données un procédé selon l'une des revendications 1 à 3.
